# EUROPÄISCHE PATENTSCHRIFT

(11) **EP 2 340 501 B1**
(45) Veröffentlichungstag und Bekanntmachung des Hinweises auf die Patenterteilung: **29.03.2017**
(21) Anmeldenummer: 09741242.3
(22) Anmeldetag: 26.10.2009
(51) Int. Cl.: G06F 21/00, H04L 29/06, H04W 12/06

(54) **VERFAHREN ZUR CHALLENGE-RESPONSE-AUTHENTISIERUNG ZWISCHEN EINEM LESEGERÄT UND EINEM TRANSPONDER BASIEREND AUF EINER KONTAKTLOSEN DATENÜBERTAGUNG**
METHOD FOR CHALLENGE RESPONSE AUTHENTICATION BETWEEN A READING DEVICE AND A TRANSPONDER USING CONTACTLESS DATA TRANSMISSION
PROCÉDÉ D'AUTHENTIFICATION PAR QUESTION/RÉPONSE ENTRE UN APPAREIL DE LECTURE ET UN TRANSPONDEUR SUR LA BASE D'UNE TRANSMISSION DE DONNÉES SANS CONTACT

(30) Priorität: 27.10.2008 DE 102008053369
(43) Veröffentlichungstag der Anmeldung: 06.07.2011
(73) Patentinhaber: Giesecke & Devrient GmbH, 81677 München (DE)
(72) Erfinder: FINKENZELLER, Klaus, 85774 Unterföhring (DE); MEISTER, Gisela, 81737 München (DE); WACKER, Dirk, 81371 München (DE)
(86) Internationale Anmeldenummer: PCT/EP2009/007654
(87) Internationale Veröffentlichungsnummer: WO 2010/049112

(56) Entgegenhaltungen:
- FELDHOFER M ED - MATIJASEVIC M ET AL: "An authentication protocol in a security layer for RFID smart tags" ELECTROTECHNICAL CONFERENCE, 2004. MELECON 2004. PROCEEDINGS OF THE 12 TH IEEE MEDITERRANEAN DUBROVNIK, CROATIA 12-15 MAY 2004, PISCATAWAY, NJ, USA,IEEE, US LNKD- DOI:10.1109/MELCON.2004.1347041, 12. Mai 2004 (2004-05-12), Seiten 759-762, XP010734683 ISBN: 978-0-7803-8271-8 & MARTIN FELDHOFER: "A proposal for an Authentication Protocol in a Security Layer for RFID Smart Tags" Stiftung Secure Information and Communication Technologies SIC, 2003 2003, Gefunden im Internet: URL:http://www.avoine.net/rfid/> [gefunden am 2010-05-06]
- "IDENTIFICATION CARDS - CONTACTLESS INTEGRATED CIRCUIT(S) CARDS - PROXIMITY CARDS//CARTES D'IDENTIFICATION - CARTES A CIRCUIT(S) INTEGRE(S) SANS CONTACT - CARTES DE PROXIMITE" INTERNATIONAL STANDARD ISO/IEC, XX, XX, Nr. 14443-4, 1. Februar 2001 (2001-02-01), Seiten 1-34,I, XP001146347 in der Anmeldung erwähnt
- "IDENTIFICATION CARDS - CONTACTLESS INTEGRATED CIRCUIT(S) CARDS - PROXIMITY CARDS - PROXIMITY CARDS -//CARTES D'IDENTIFICATION - CARTES A CIRCUIT(S) INTEGRE(S) SANS CONTACT - CARTES DE PROXIMITE -" INTERNATIONAL STANDARD ISO/IEC, XX, XX, Nr. 14443-3, 1. Februar 2001 (2001-02-01), Seiten I-VII,01, XP001146902 in der Anmeldung erwähnt

## Beschreibung

Die Erfindung betrifft ein Verfahren zur Challenge-Response-Authentisierung zwischen einem Lesegerät und einem Transponder basierend auf einer kontaktlosen Datenübertragung.

Die Erfindung liegt auf dem technischen Gebiet der kontaktlosen Übertragung von Daten zwischen einem Lesegerät und einem Transponder. Dabei werden im Ansprechfeld eines Lesegeräts Informationen kontaktlos zwischen Lesegerät und Transponder ausgetauscht, wobei der Transponder beispielsweise ein tragbarer Datenträger, insbesondere in der Form einer Chipkarte, ist.

Zur Echtheitserkennung zwischen einem Transponder und einem Lesegerät werden nach dem Stand der Technik Authentisierungsverfahren verwendet, beispielsweise die hinlänglich bekannte Challenge-Response-Authentisierung. Die hierbei benötigten Daten werden üblicherweise basierend auf einem Kommunikationsprotokoll übertragen. Gelangt ein Transponder in das Ansprechfeld eines Lesegeräts, muss jedoch zunächst eine Kommunikationsbeziehung zwischen diesen beiden Einheiten aufgebaut werden und die benötigten Protokollparameter ausgetauscht werden, bevor die eigentliche Challenge-Response-Authentisierung durchgeführt werden kann. Da bei kontaktlosen Transpondern immer von der möglichen Anwesenheit weiterer Transponder im Ansprechfeld des Lesegeräts ausgegangen werden muss, wird zunächst ein sog. Antikollisionsverfahren durchgeführt. Dieses Verfahren dient zur Selektion eines einzelnen Transponders basierend auf der Analyse von Bitkollisionen. Nach der Vereinzelung eines Transponders wird anschließend das Übertragungsprotokoll auf dem Transponder initialisiert und die Authentisierung durchgeführt.

Aus dem Stand der Technik sind verschiedene Antikollisionsverfahren zwischen kontaktlos kommunizierenden Lesegeräten und Transpondern bekannt. Prinzipiell ermitteln diese Verfahren die von den Transpondern gesendeten eindeutigen Seriennummern, um basierend darauf einen Transponder anhand seiner Seriennummer zu selektieren. Es können dabei deterministische Antikollisionsverfahren, wie z.B. das Binary-Search-Verfahren, oder stochastische Verfahren, wie "Slotted Alloha", eingesetzt werden. Im RFID-Handbuch von Klaus Finkenzeller, Hanser Verlag, 4. Auflage, 2006, sind im Kapitel 7.2.4 (Seiten 220 bis 234) verschiedene Antikollisionsverfahren nach dem Stand der Technik beschrieben.

Bei den aus dem Stand der Technik bekannten Challenge-Response-Authentisierungen zwischen Transponder und Lesegerät ist es nachteilhaft, dass eine Kommunikationsbeziehung zwischen Transponder und Lesegerät vor der Durchführung der Authentisierung vollständig aufgebaut sein muss. Das heißt, es muss zunächst ein Antikollisionsverfahren durchlaufen werden und anschließend ein Übertragungsprotokoll initialisiert werden. Die Authentisierung benötigt somit eine aufwändige Implementation eines Protokolls und ist mit Zeitverzögerungen verbunden, da zunächst ein Antikollisionsverfahren durchgeführt werden muss.

Aufgabe der Erfindung ist es deshalb, eine Challenge-Response-Authentisierung zwischen einem Lesegerät und einem Transponder zu schaffen, welche mit geringem Aufwand und in kurzer Zeit durchgeführt werden kann.

Diese Aufgabe wird durch das Verfahren gemäß Patentanspruch 1 bzw. das System gemäß Patentanspruch 18 bzw. das Lesegerät gemäß Patentanspruch 20 bzw. den Transponder gemäß Patentanspruch 21 gelöst. Weiterbildungen der Erfindung sind in den abhängigen Ansprüchen definiert.

In dem erfindungsgemäßen Verfahren werden Challenge-Daten von dem Lesegerät an den Transponder mittels eines oder mehrerer Kommandos eines Antikollisionsverfahrens innerhalb einer Antikollisions-Schleife des Antikollisionsverfahrens übertragen, wobei das oder die Kommandos zur Ermittlung von Transponder-Identifikationsdaten von Transpondern im Feld des Lesegeräts dienen. Dabei werden in einem jeweiligen Kommando Challenge-Daten in einem Datenfeld übermittelt, welches zur Spezifikation von Transponder-Identifikationsdaten verwendet wird, wobei durch einen Parameterwert in zumindest einem der Kommandos, z.B. in allen Kommandos oder nur im ersten Kommando der Antikollisibns-Schleife, dem Transponder angezeigt wird, dass das Datenfeld des oder der Kommandos anstatt von Transponder-Identifikationsdaten Challenge-Daten enthält.

Der im erfindungsgemäßen Verfahren verwendete Transponder erkennt dann anhand des Parameterwerts in dem zumindest einen Kommando, dass mit den Kommandos Challenge-Daten übertragen werden, wobei der Transponder die übertragenen Challenge-Daten basierend auf der Challenge-Response-Authentisierung geeignet verarbeitet. Insbesondere sendet der Transponder im Rahmen der Authentisierung nach vollständiger Übermittlung der Challenge-Daten Response-Daten an das Lesegerät zurück.

Erfindungsgemäß wird somit ein an sich bekanntes Antikollisionsverfahren zur Übertragung von Authentisierungsdaten in der Form von Challenges bzw. Responses genutzt. Dies wird dadurch ermöglicht, dass in entsprechenden Kommandos eines Antikollisionsverfahrens, welche eigentlich zur Ermittlung von Transponder-Identifikationsdaten zur Vereinzelung von Transpondern dienen, nunmehr Challenge-Daten übermittelt werden. Die nicht bestimmungsgemäße Verwendung dieser Kommandos wird einem das erfindungsgemäße Verfahren unterstützenden Transponder durch eine entsprechende Wahl eines Parameterwerts angezeigt. Beispielsweise kann ein Transponder aus einer untypischen Wahl des Parameterwerts in einer Antikollisions-Schleife (insbesondere zu Beginn der Antikollisions-Schleife) erkennen, dass in den entsprechenden Kommandos der Antikollisions-Schleife Challenge-Daten übermittelt werden.

In einer besonders bevorzugten Ausführungsform des erfindungsgemäßen Verfahrens wird als Antikollisionsverfahren das hinlänglich aus dem Stand der Technik bekannte Binary-Search-Verfahren, insbesondere das dynamische Binary-Search-Verfahren, verwendet. In dem oben erwähnten RFID-Handbuch findet sich in Kapitel 7.2.4.3.1 eine Beschreibung des dynamischen Binary-Search-Verfahrens. Darüber hinaus wird zur kontaktlosen Kommunikation zwischen Lesegerät und Datenträger vorzugsweise der hinlänglich aus dem Stand der Technik bekannte Standard ISO 14443 eingesetzt. In diesem Fall sind die verwendeten Kommandos des Antikollisionsverfahrens SEL-Kommandos und das Datenfeld zur Spezifikation der Transponder-Identifikationsdaten ist ein UID-Datenfeld zur Spezifikation der UID eines Transponders. Ferner ist der Parameterwert, durch welchen spezifiziert wird, dass Challenge-Daten übertragen werden, der NVB-Wert (NVB = Number of Valid Bits) des jeweiligen SEL-Kommandos, wobei der NVB-Wert die Anzahl der im Lesegerät bekannten Bits der UID (d.h. der Seriennummer) des Transponders anzeigt und wobei durch einen NVB-Wert, gemäß dem zumindest ein Teil der Bits, z.B. alle Bits, der UID des Transponders bekannt sind, dem Transponder angezeigt wird, dass in dem UID-Datenfeld des SEL-Kommandos Challenge-Daten anstatt der UID übertragen werden.

In einer bevorzugten Variante des erfindungsgemäßen Verfahrens wird die Übertragung der Challenge-Daten in mehreren Teilen über mehrere Kommandos an den Transponder unterstützt. Dabei übermittelt der Transponder nach Empfang eines jeweiligen Kommandos eine jeweilige Antwort an das Lesegerät, woraufhin das Lesegerät nach Empfang der Antwort ein neues Kommando mit einem noch nicht an den Transponder übermittelten Teil der Challenge-Daten an den Transponder übermittelt, sofern noch nicht alle Challenge-Daten an den Transponder übermittelt worden sind.

In einer besonders einfachen Variante des erfindungsgemäßen Verfahrens wird als Antwort des Transponders ein SAK-Acknowledgement gemäß dem Standard ISO 14443 übermittelt. Diese Variante kommt insbesondere dann zum Einsatz, wenn der NVB-Wert in einem SEL-Kommando des Lesegeräts anzeigt, dass alle Bits der UID des Transponders bekannt sind.

In einer weiteren Variante des erfindungsgemäßen Verfahrens enthält die Antwort des Transponders ein Datenfeld, welches zur Übermittlung von Transponder-Identifikationsdaten des Transponders verwendet wird, wobei das Datenfeld anstatt der Transponder-Identifikationsdaten eine Zufallszahl und/ oder eine vorbestimmte Bitfolge umfasst. Insbesondere wird dabei als Datenfeld ein UID-Datenfeld zur Übermittlung der UID des Transponders gemäß dem Standard ISO 14443 verwendet. Vorzugsweise wird die soeben beschriebene Variante einer Antwort des Transponders dann verwendet, wenn der NVB-Parameter eines SEL-Kommandos anzeigt, dass lediglich ein Teil der Bits der Transponder-UID bekannt ist.

Die jeweilige, vom Transponder ausgesendete Antwort enthält vorzugsweise auch die Information, dass die Antwort eine Zufallszahl und/oder eine vorbestimmte Bitfolge enthält, wobei das Lesegerät diese Information erkennen kann. Die Information, dass die Antwort eine Zufallszahl und/oder eine vorbestimmte Bitfolge umfasst, kann beispielsweise durch die Simulation einer Bitkollision in der Antwort angezeigt werden, wobei ein Verfahren, das es einem Transponder ermöglicht, eine Bitkollision zu simulieren, in der deutschen Patentanmeldung DE 10 2006 027 200 beschrieben ist. Der gesamte Offenbarungsgehalt dieser Anmeldung wird durch Verweis zum Inhalt der vorliegenden Anmeldung gemacht.

Mit Hilfe der soeben beschriebenen Information kann das Lesegerät erkennen, wenn Antworten von mehr als einem Transponder an das Lesegerät übertragen werden. Wenn das Lesegerät nämlich eine Antwort empfängt, welche nicht die Information umfasst, dass die Antwort eine Zufallszahl und/oder eine vorbestimmte Bitfolge enthält, kann hieraus auf die Anwesenheit von mehreren Transpondern im Feld des Lesegeräts geschlossen werden. Anschließend kann dann anstatt des erfindungsgemäßen Verfahrens ein reguläres Antikollisionsverfahren zur Vereinzelung der Transponder durchgeführt werden.

In einer weiteren bevorzugten Variante des erfindungsgemäßen Verfahrens werden die Zufallszahlen und/oder vorbestimmten Bitfolgen der jeweiligen Antworten nach Übermittlung der Challenge-Daten zur Selektion des Transponders durch das Lesegerät verwendet.

Zur Übertragung von entsprechenden Response-Daten in Antwort auf die Challenge-Daten wird in einer bevorzugten Variante nach Übermittlung der Challenge-Daten eine weitere Antikollisions-Schleife durchlaufen, in der die Response-Daten von dem Transponder an das Lesegerät mittels einer oder mehrerer Antworten des Antikollisionsverfahrens übermittelt werden, wobei die Response-Daten in einem Datenfeld der Antwort enthalten sind, welches eigentlich zur Übermittlung von Transponder-Identifikationsdaten dient.

In einer weiteren Ausgestaltung des erfindungsgemäßen Verfahrens werden in der weiteren Antikollisions-Schleife ein oder mehrere SEL-Kommandos von dem Lesegerät an den Transponder übertragen, wobei die SEL-Kommandos durch den Transponder mit Response-Daten enthaltenden Antworten beantwortet werden und wobei in einem jeweiligen SEL-Kommando durch den NVB-Wert angezeigt wird, dass dem Lesegerät kein Bit der UID des Transponders bekannt ist. Dies führt dazu, dass die Response-Daten in einem UID-Datenfeld mit maximaler Länge übertragen werden.

In einer bevorzugten Variante wird die weitere Antikollisions-Schleife dadurch beendet, dass das Lesegerät in einem Selektionskommando des Antikollisionsverfahrens zuvor vom Transponder empfangene Response-Daten an den Transponder überträgt.

In einer weiteren Ausgestaltung des erfindungsgemäßen Verfahrens werden in der weiteren Antikollisions-Schleife ferner nach Übertragung der Response-Daten von dem Transponder zu dem Lesegerät wiederum Response-Daten von dem Lesegerät an den Transponder übertragen. Vorzugsweise werden die Response-Daten von dem Transponder an das Lesegerät derart übertragen, dass von dem Lesegerät an den Transponder aufeinander folgend SEL-Kommandos (gegebenenfalls mit variablem und/ oder ansteigendem NVB-Wert) übermittelt werden, welche durch den Transponder mit Response-Daten enthaltenden Antworten beantwortet werden. Vorzugsweise zeigen die NVB-Werte der jeweiligen SEL-Kommandos dabei an, dass lediglich ein Teil der Bits der UID des Transponders bekannt ist. Zur Identifikation, dass die Antworten Response-Daten enthalten, wird vorzugsweise ferner eine Bitkollision in der jeweiligen Antwort simuliert. Demgegenüber werden die Response-Daten von dem Lesegerät an den Transponder vorzugsweise in dem UID-Datenfeld von aufeinander folgenden SEL-Komman-dos (gegebenenfalls mit variablem und/ oder ansteigendem NVB-Wert) übermittelt.

Neben dem oben beschriebenen Verfahren umfasst die Erfindung ferner ein System zur kontaktlosen Challenge-Response-Authentisierung, umfassend ein Lesegerät und einen Transponder, welche im Betrieb derart zusammenwirken, dass jede Variante des erfindungsgemäßen Verfahrens mit dem System durchführbar ist.

Die Erfindung betrifft ferner ein Lesegerät zur Verwendung in dem erfindungsgemäßen System, welches derart ausgestaltet ist, dass es im Betrieb Challenge-Daten mittels eines oder mehrerer Kommandos eines Antikollisionsverfahrens zur Ermittlung von Transponder-Identifikationsdaten innerhalb einer Antikollisions-Schleife aussendet, wobei in dem oder den Kommandos jeweils Challenge-Daten in einem Datenfeld enthalten sind, welches zur Spezifikation von Transponder-Identifikationsdaten verwendet wird, wobei durch einen Parameterwert in dem oder zumindest einem der Kommandos angezeigt wird, dass das Datenfeld des oder der Kommandos anstatt von Transponder-Identifikadonsdaten Challenge-Daten enthält.

Ferner umfasst die Erfindung einen entsprechenden Transponder zur Verwendung in dem erfindungsgemäßen System, der im Betrieb anhand eines Parameterwerts in dem jeweiligen empfangenen Kommando eines Antikollisionsverfahrens erkennt, dass in dem Kommando Challenge-Daten übermittelt werden, wobei der Transponder die übermittelten Challenge-Daten basierend auf einer Challenge-Response-Authentisierung verarbeitet.

Ausführungsbeispiele der Erfindung werden nachfolgend anhand der beigefügten Figuren detailliert beschrieben.

Es zeigen:
- Fig. 1: ein Flussdiagramm, welches eine erste Ausführungsform des erfindungsgemäßen Verfahrens wiedergibt;
- Fig. 2: eine schematische Darstellung der Verwendung von Datenfeldern in SEL-Kommandos gemäß einer Ausführungsform des erfindungsgemäßen Verfahrens;
- Fig. 3: ein Flussdiagramm, welches eine zweite Ausführungsform des erfindungsgemäßen Verfahrens wiedergibt;
- Fig. 4: ein Flussdiagramm, welches die Erzeugung einer Seriennummer für einen Transponder gemäß einer Ausführungsform des erfindungsgemäßen Verfahrens zeigt;
- Fig. 5: ein Flussdiagramm, welches die Übertragung einer Response von dem Transponder zum Lesegerät gemäß einer Ausführungsform des erfindungsgemäßen Verfahrens wiedergibt;
- Fig. 6: eine schematische Darstellung einer Kommandofolge zur Übertragung von Challenges und Responses gemäß einer Ausführungsform des erfindungsgemäßen Verfahrens; und
- Fig. 7: eine schematische Darstellung der Übertragung einer Response vom Transponder zum Lesegerät sowie einer darauffolgenden Response vom Lesegerät zum Transponder gemäß einer Ausführungsform des erfindungsgemäßen Verfahrens.

Im Folgenden werden Ausführungsformen des erfindungsgemäßen Verfahrens anhand einer berührungslosen Nahfeld-Kommunikation zwischen einem RFID-Transponder in der Form eines tragbaren Datenträgers und einem Lesegerät basierend auf dem Standard ISO 14443-3 erläutert. In den nachfolgend beschriebenen Varianten der Erfindung wird als Antikollisionsverfahren das hinlänglich aus dem Stand der Technik bekannte dynamische Binary-Search-Verfahren eingesetzt.

In dem dynamischen Binary-Search-Verfahren werden sog. SEL-Kommandos zwischen Lesegerät und Transponder in verschiedenen Cascade-Leveln übertragen, wobei Ziel des Austauschs der SEL-Kommandos die Selektion bzw. Vereinzelung eines Transponders im Feld des Lesegeräts ist, um von dem vereinzelten Transponder Daten auszulesen. Hierzu werden aufeinander folgend innerhalb einer Antikollisions-Schleife SEL-Kommandos vom Lesegerät ausgesendet, wobei in jedem SEL-Kommando in einem entsprechenden NVB-Feld spezifiziert ist, wie viele Bits der UID (d.h. der Seriennummer) eines Transponders im Feld bereits bekannt sind. Die Antikollisions-Schleife beginnt mit einem SEL-Kommando, in dem durch den NVB-Wert "20" angezeigt wird, dass kein Bit der UID des Transponders bekannt ist. Anschließend antworten auf dieses Kommando alle Transponder im Feld mit ihrer UID. Da sich die Bits der einzelnen UIDs der Transponder an verschiedenen Bitstellen unterscheiden, wird im Lesegerät eine Bitfolge mit entsprechenden Kollisionen empfangen, wobei im Folgenden die Position einer Kollision mit "X" bezeichnet wird.

Eine Kollision bedeutet folglich, dass sich an der entsprechenden Bitstelle zumindest zwei Transponder im Feld des Lesegeräts in ihrer UID unterscheiden. Die Bitfolge bis zur ersten auftretenden Kollision ist somit für alle Transponder identisch. Zur Selektion eines dieser Transponder werden anschließend aufeinander folgend weitere SEL-Kommandos in der Form von Requests übertragen, wobei in den Kommandos bereits die bekannten Bits einer Transponder-UID spezifiziert sind. Dabei kann das Bit der Kollision auf 1 oder auf 0 gesetzt werden. Anschließend wird von den Transpondern, welche die im Request-Kommando spezifizierte Bitfolge enthalten, lediglich der Anteil der UID zurückgegeben, welcher im Lesegerät unbekannt ist. Nachfolgend kann wiederum über die entsprechend aufgetretenen Kollisionen ein neuer Request mit einer größeren Anzahl an bekannten Bits und entsprechendem NVB-Wert übertragen werden. Das Verfahren führt schließlich zu einer Übertragung einer Bitfolge ohne Kollisionen vom Transponder zum Lesegerät. Zu diesem Zeitpunkt wird das Verfahren beendet, da nunmehr eine UID eines Transponders im Feld bekannt ist. Der Transponder kann dann durch ein sog. Select-Kommando, bei dem der NVB-Wert auf 70 gesetzt ist (d.h. alle Bits der UID sind bekannt) vereinzelt werden. Die hierdurch vorgenommene Selektion wird durch ein Select-Acknowledgement SAK durch den Transponder bestätigt. Anschließend können von dem selektierten Transponder Daten ausgelesen werden.

In der nachfolgend beschriebenen Ausführungsform des erfindungsgemäßen Verfahrens werden die entsprechenden SEL-Kommandos des dynamischen Binary-Search-Verfahrens dazu verwendet, eine sog. Challenge-Response-Authentisierung durchzuführen. Die Challenge-Response-Authentisierung ist hinlänglich aus dem Stand der Technik bekannt und beruht darauf, dass von dem Lesegerät eine Challenge (z.B. in der Form einer Zufallszahl) an den Transponder übermittelt wird, der daraufhin eine Response, beispielsweise basierend auf einem gemeinsamen Geheimnis zwischen Lesegerät und Transponder, erzeugt. Die Response wird an das Lesegerät zurückgesendet. Anschließend wird die Authentizität der Response im Lesegerät überprüft. Beispielsweise wird ermittelt, ob die Response mit dem gleichen Geheimnis wie die ursprüngliche Challenge generiert wurde.

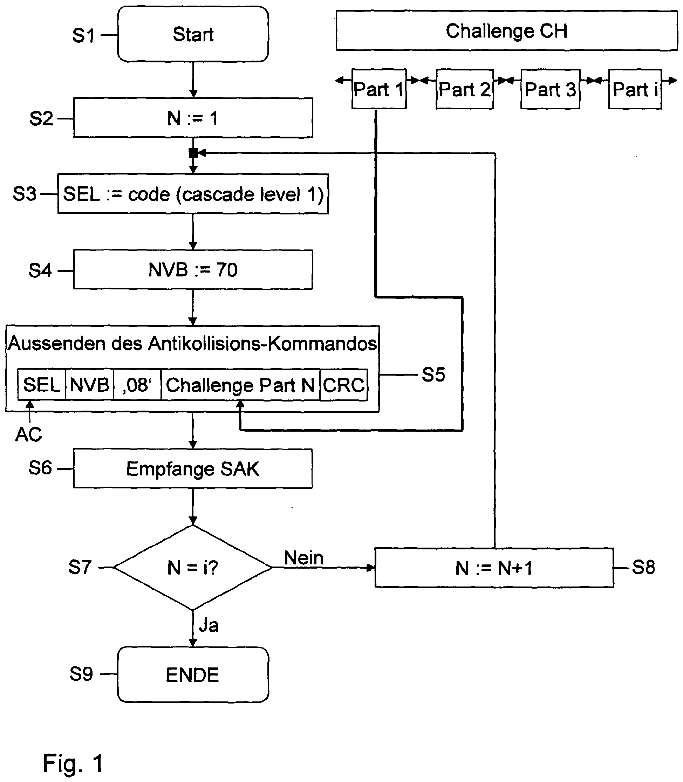

Fig.1 zeigt eine erste Ausführungsform des erfindungsgemäßen Verfahrens. Nach dem Starten der Antikollisions-Schleife (Schritt S1) wird in Schritt S2 die Anzahl N der Iterationen auf 1 gesetzt. Im Schritt S3 wird das zu verwendende SEL-Kommando basierend auf dem ersten Cascade-Level festgelegt, d.h. SEL: = code (cascade level 1). Im Schritt S4 wird der NVB-Wert auf 70 gesetzt, was bedeutet, dass in dem nachfolgenden Antikollisions-Kommando die Anzahl der bekannten Bits auf den maximalen Wert gesetzt ist. Schließlich wird ein Antikollisions-Kommando AC als entsprechendes SEL-Kommando mit dem NVB-Wert von 70 erzeugt und vom Lesegerät ausgesendet (Schritt S5). Das Kommando entspricht dabei einem Request zur Ermittlung einer UID eines Transponders im Feld des Lesegeräts. Das Feld nach dem NVB-Wert ist in dem Kommando auf "08" gesetzt, was im Standard ISO 14443 eine zufällige Seriennummer kennzeichnet. Nach dem Wert "08" folgt ein Teil einer Challenge CH der Challenge-Response-Authentisierung. Die einzelnen Teile der Challenge sind dabei in Fig.1 mit Part 1, Part 2, ..., Part i bezeichnet. Das Kommando endet mit einer Prüfsumme CRC. Anstatt das Feld hinter dem NVB-Wert mit "08" zu belegen, kann auch bereits in diesem Feld ein Byte der Challenge CH übertragen werden.

Befindet sich im Feld des Lesegeräts ein erfindungsgemäßer Transponder (d.h. ein Transponder, der das erfindungsgemäße Verfahren unterstützt), so erkennt dieser, dass mit dem Request nicht nach einer UID eines Transponders gesucht wird, sondern eine Challenge übertragen wird. Der Transponder erkennt dies an dem untypischen Verhalten, dass die Antikollisions-Schleife in der ersten Iteration nicht mit dem NVB-Wert 20 beginnt, der anzeigt, dass von der zu ermittelnden UID des Transponders noch kein Bit bekannt ist. Ein NVB-Wert von 20 entspricht dabei im Standard ISO 14443 einer Anzahl von null bekannten Bits, da in diesem Standard die zwei Byte des Kommandos mitgezählt werden. Nach Empfang des Requests AC beim erfindungsgemäßen Transponder sendet dieser ein Acknowledgement SAK aus, welches im Schritt S6 vom Lesegerät empfangen wird. In Schritt S7 wird überprüft, ob bereits alle Teile der Challenge CH übertragen wurden. Ist dies nicht der Fall, wird der Iterationszähler in Schritt S8 um eins hochgesetzt und zu Schritt S3 zurückgegangen, um in einem nächsten Request einen weiteren Teil der Challenge CH an den Transponder zu übertragen. Das Verfahren wird schließlich beendet (Schritt S9) wenn die gesamte Challenge CH übertragen wurde.

Ein zweiter, nicht erfindungsgemäßer Transponder, der sich zufällig ebenfalls im Ansprechfeld des Lesegeräts befindet und nicht das erfindungsgemäße Verfahren unterstützt, antwortet auf die vom Lesegerät ausgesendeten SEL-Kommandos nur dann, wenn seine eigene UID mit den Challenge-Daten übereinstimmt, die mit dem Antikollisions-Kommando ausgesendet werden. In dem Standard ISO 14443 werden vier Byte für die UID verwendet. Das bedeutet, dass die Wahrscheinlichkeit einer Übereinstimmung der UID eines nicht erfindungsgemäßen Transponders mit entsprechenden Challenge-Daten nur bei 1:2³² (ca. 1:4 Milliarden) liegt. Eine Störung der Übertragung einer Challenge durch einen nicht erfindungsgemäßen Transponder ist deshalb sehr unwahrscheinlich.

In dem obigen Verfahren kann nicht die Anwesenheit von weiteren erfindungsgemäßen Transpondern erkannt werden. Um dies zu erreichen, wird gemäß einer weiteren Ausführungsform der Erfindung eine Übertragung der für die UID vorgesehenen Datenfelder in Splitframes durchgeführt, d.h. es wird nicht das gesamte, in einem Antikollisions-Kommando nutzbare Datenfeld zur Übertragung von Challenge-Daten verwendet.

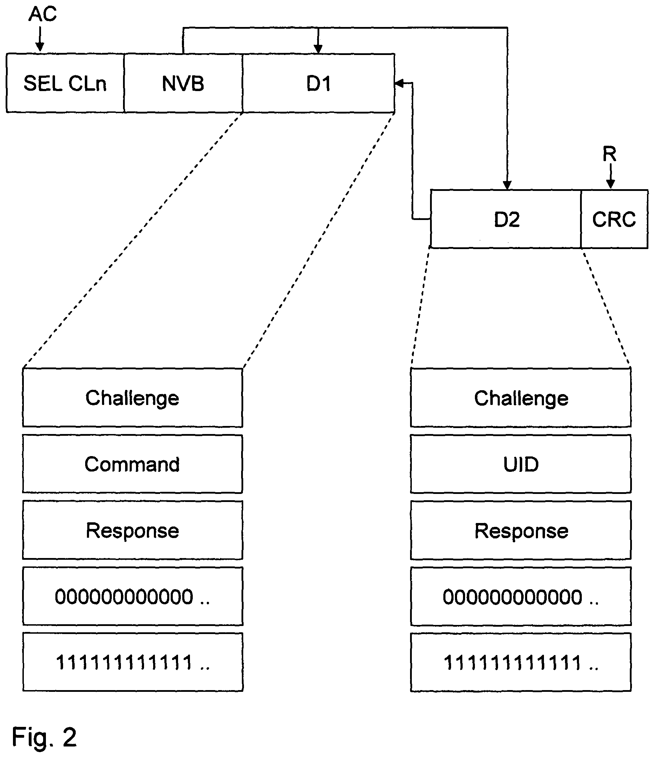

Fig. 2 verdeutlicht nochmals die Verwendung von Splitframes. In einem von einem Lesegerät ausgesendeten Request AC, gekennzeichnet durch das SEL-Kommando des Cascade-Levels n (CL n = Cascade Level n) und den entsprechenden NVB-Wert, wird ein Datenfeld D1 übertragen, welches kürzer als eine vorgegebene Maximallänge ist. Dies wird durch einen entsprechenden NVB-Wert angezeigt, der wiedergibt, dass nicht alle Bits der UID eines Transponders bekannt sind. Das heißt, der NVB-Wert ist kleiner als die Länge einer UID eines Transponders. In Antwort auf einen übertragenen Splitframe überträgt ein Transponder dann eine entsprechende Antwort R, welche ein Datenfeld D2 enthält, dessen Länge der Differenz aus UID-Länge und Länge des Datenfelds D1 entspricht. Ferner enthält die Antwort R eine entsprechende Prüfsumme CRC. Innerhalb der Datenfelder D1 und D2 können neben UIDs beliebige Nutzdaten übertragen werden, wobei Beispiele von solchen Nutzdaten im unteren Teil der Fig. 2 wiedergegeben sind. Erfindungsgemäß werden die Datenfelder D1 und D2 insbesondere zur Übertragung entsprechender Challenges und Responses in einer Challenge-Response-Authentisierung genutzt.

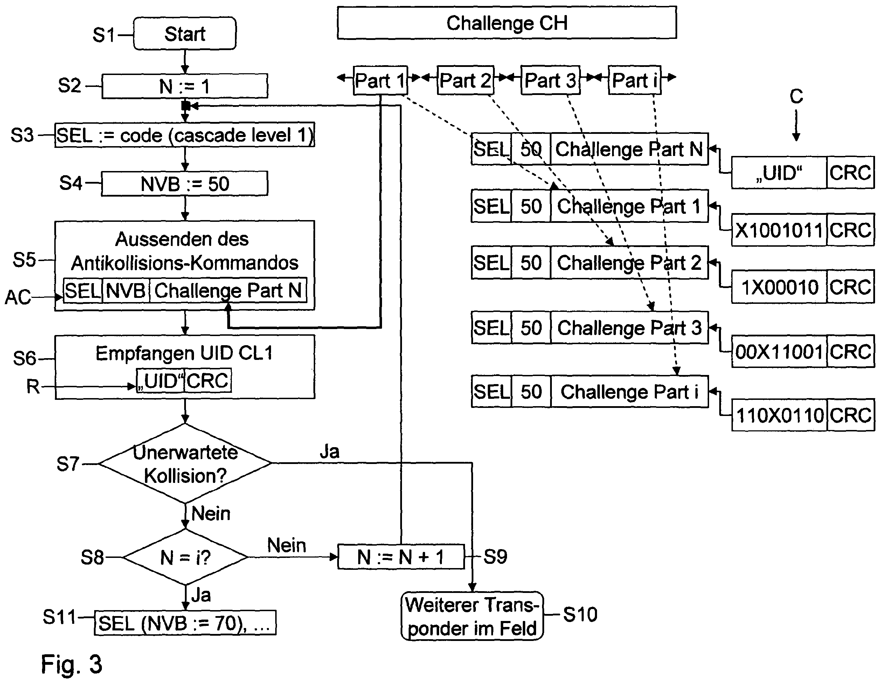

Fig. 3 zeigt ein Ablaufdiagramm gemäß einer zweiten Ausführungsform des erfindungsgemäßen Verfahrens, wobei die im Vorangegangenen beschriebenen Splitframes verwendet werden. Im Unterschied zu der Ausführungsform gemäß Fig.1 wird die Anzahl bekannter Bits größer Null, jedoch kleiner als die Länge einer UID gesetzt. Die Schritte S1 bis S3 der Fig. 3 entsprechen den Schritten S1 bis S3 gemäß Fig.1. In Schritt S4 wird nunmehr der NVB-Wert für das Antikollisions-Kommando AC nicht mehr auf 70, sondern auf 50 gesetzt, was einem Wert von 3 Byte entspricht, der kürzer als die UID eines Transponders ist. Analog zu Fig. 1 wird in Schritt S5 nunmehr im Antikollisions-Kommando AC ein Teil der Challenge CH übertragen.

Da ein Antikollisionsalgorithmus üblicherweise in der ersten Iteration mit NVB := 20 beginnt, erkennt ein erfindungsgemäßer Transponder im Feld des Lesegeräts an dem untypischen Wert von 50, dass das erfindungsgemäße Authentisierungsverfahren durchgeführt wird. Demzufolge antworten alle erfindungsgemäßen Transponder im Feld des Lesegeräts dadurch, dass sie im Datenfeld UID der verbleibenden Länge (d.h. im Datenfeld D2 gemäß Fig. 2) eine Zufallszahl oder in einer alternativen Variante eine Reihe von "0"-Bits bzw. eine Reihe von "1"-Bits übertragen. Die Antwort eines erfindungsgemäßen Transponders ist in Fig. 3 mit R bezeichnet und wird im Schritt S6 empfangen.

Als zusätzliche Information, dass es sich um einen erfindungsgemäßen Transponder handelt, wird darüber hinaus in der Antwort R an einer vorbestimmten Stelle eine Bitkollision simuliert, welche dem Lesegerät auch als Acknowledgement-Information dienen kann. Im rechten Teil der Fig. 3 sind in der Spalte C Beispiele von auf die einzelnen Antikollisions-Kommandos zurückgesendeten Antworten wiedergegeben. Man erkennt, dass jede Antwort eine Bitkollision "X" enthält. Erkennt das Lesegerät eine simulierte Bitkollision an der vorbestimmten Stelle, kann es daraus schließen, dass ein erfindungsgemäßer Transponder die Challenge empfangen hat. Liegt somit gemäß einer Überprüfung in Schritt S7 eine erwartete (simulierte) Bitkollision vor, wird die Übertragung eines weiteren Teils der Challenge CH in einer neuen Iterationsschleife (Schritt S9) veranlasst, sofern eine Überprüfung in Schritt S8 ergibt, dass noch nicht alle Teile der Challenge CH übertragen worden sind.

Befindet sich ein zweiter erfindungsgemäßer Transponder im Ansprechfeld des Lesegeräts, so kommt es durch die unterschiedlichen zurückgesendeten Zufallszahlen der Transponder mit großer Wahrscheinlichkeit zu weiteren Bitkollisionen. Diese weiteren Bitkollisionen werden durch das Lesegerät erkannt und entsprechen unerwarteten Bitkollisionen. Ebenso antwortet ein zweiter, nicht erfindungsgemäßer Transponder, der sich zufällig ebenfalls im Ansprechfeld des Lesegeräts befindet, auf das ausgesendete Antikollisions-Kommando AC, sofern seine eigene UID mit den im Datenfeld UID gesendeten Challenge-Daten übereinstimmt. Auch in diesem Fall kommt es zu weiteren Bitkollisionen, welche von dem Lesegerät erkannt werden können. Im Schritt S7 der Fig. 3 erfolgt die Erkennung von unerwarteten Bitkollisionen durch das Lesegerät, welches bei Vorliegen einer unerwarteten Kollision in Schritt S10 feststellt, dass ein weiterer Transponder im Ansprechfeld des Lesegeräts ist. Als Konsequenz wird die Antikollisions-Schleife beendet, da das Authentisierungsverfahren durch weitere Transponder im Ansprechfeld gestört wird. Es kann dann anschließend ein herkömmliches Antikollisionsverfahren zur Identifizierung der Transponder im Feld des Lesegeräts durchgeführt werden. Ist die Identifizierung abgeschlossen, kann die Übertragung der Challenge fortgesetzt werden, indem der nächste Teil der noch nicht übertragenen Challenge ausgesendet wird. Voraussetzung hierfür ist, dass die Transponder die beim ersten Durchlaufen der Antikollisions-Schleife ausgesandten Challenges speichern.

Nach dem erfolgreichen Durchlaufen eines Antikollisionsalgorithmus wird nach dem Stand der Technik ein Transponder mittels seiner ermittelten UID selektiert. Im Standard ISO 14443 erfolgt dies durch das Aussenden eines Select-Kommandos mit dem Parameter NVB = 70, wobei dieses Select-Kommando die UID des zu vereinzelnden Transponders enthält. Der Transponder, dessen UID mit der im Select-Kommando gesendeten UID übereinstimmt, beantwortet das Select-Kommando mit einem Select-Acknowledgement SAK.

In der Ausführungsform der Fig. 3 besteht nunmehr das Problem, dass bei der Durchführung einer Challenge-Response-Authentisierung von dem Transponder keine Seriennummer, sondern eine Zufallszahl übertragen wird. Um nunmehr dennoch in dem Verfahren der Fig. 3 den Transponder zu selektieren, werden die von dem Transponder zurückgesendeten Zufallszahlen zu einer Seriennummer PUPI (PUPI = Pseudo Unique ID) zusammengesetzt und diese derart generierte Seriennummer, die im Transponder bekannt ist, wird dann zur Selektion des Transponders über einen entsprechenden SEL-Befehl mit dem NVB-Wert 70 genutzt (Schritt S11). Da in den empfangenen Antworten des Transponders Kollisionen simuliert wurden, um ein Acknowledgement an das Lesegerät zu übertragen, müssen die entsprechenden Bitpositionen der Kollisionen durch geeignete Bitwerte ersetzt werden. Beispielsweise kann die Bitposition der Kollision immer einheitlich auf "0" oder "1" gesetzt werden.

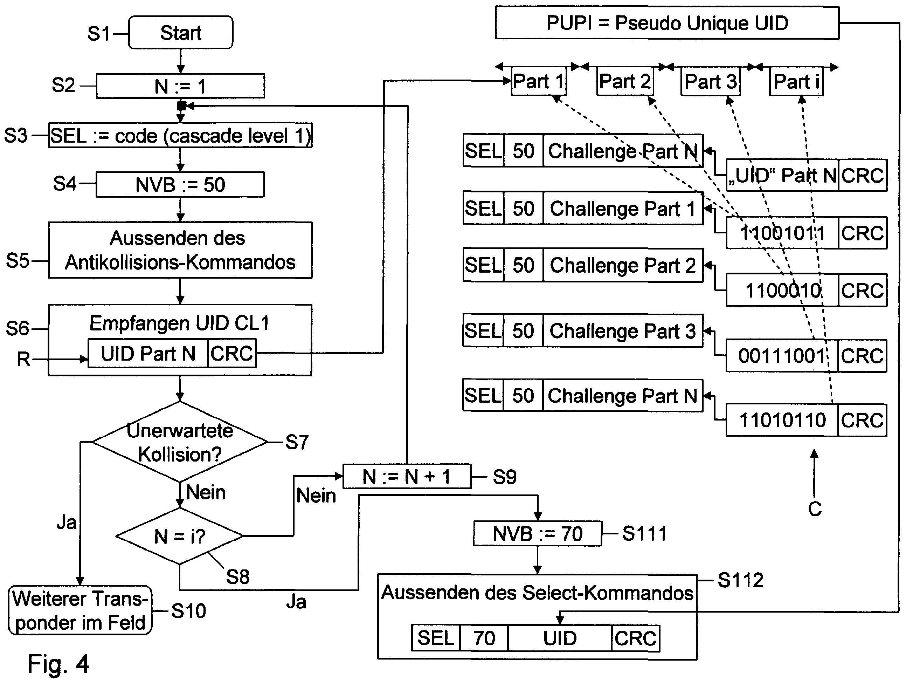

Fig. 4 verdeutlicht nochmals die Erzeugung einer Seriennummer PUPI aus den von dem Transponder zurückgesendeten Zufallszahlen. Die in Fig. 4 dargestellten Verfahrensschritte entsprechen im Wesentlichen den Verfahrensschritten der Fig. 3. Der Schritt S11 ist nunmehr als zwei Teilschritte S111 und S112 dargestellt. Im Schritt S111 wird der NVB-Wert für das Select-Kommando auf 70 gesetzt. Im Schritt S112 wird das Select-Kommando schließlich übertragen. Man erkennt, dass das Kommando nunmehr als UID die Zufallszahlen der einzelnen zuvor zurückgesendeten Antworten der Transponder enthält. Diese Antworten sind dabei in Fig. 4 wiederum in der Spalte C wiedergegeben. Dabei wurden entsprechende Bitpositionen, an welchen in Fig. 3 Kollisionen aufgetreten sind, durch ein entsprechendes "1"-Bit ersetzt.

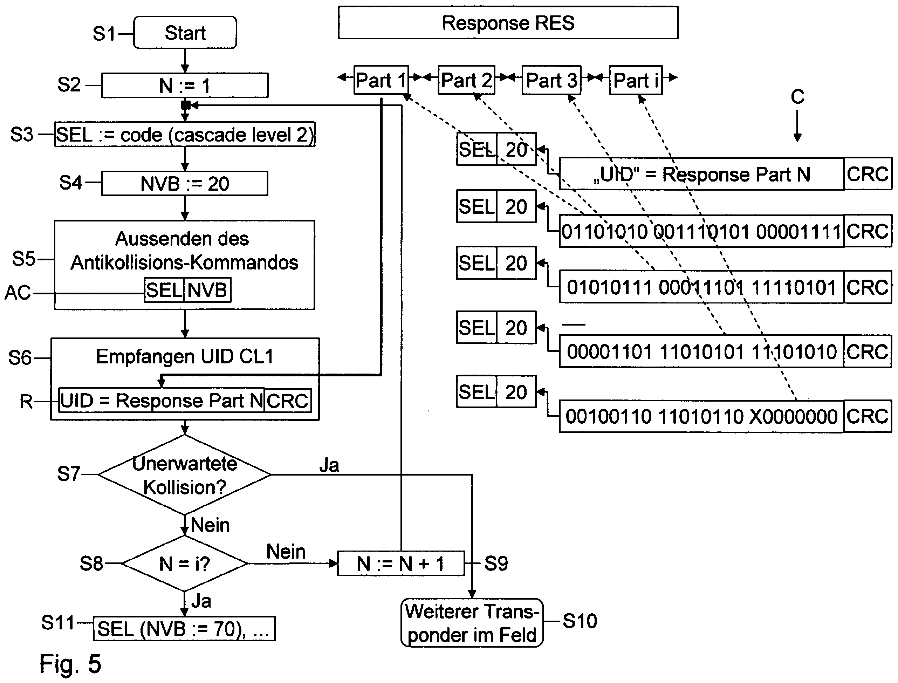

Nach der Übertragung der Challenge CH mit einem der oben beschriebenen Verfahren an den Transponder, antwortet dieser mit einer entsprechenden Response in dem Authentisierungsprozess. Eine Möglichkeit des Aussendens einer entsprechenden Response im Rahmen eines Antikollisionsverfahrens ist dabei in Fig. 5 wiedergegeben. Die Schritte S1 bis S11 entsprechen dabei im Wesentlichen den Schritten S1 bis S11 gemäß Fig. 3. Im Unterschied zur Fig. 3 wird jedoch im Schritt S3 der Cascade-Level auf 2 gesetzt (SEL:= code (cascade level 2)). Das Heraufsetzen des Cascade-Levels ist erforderlich, da mit dem Aussenden des SEL-Kommandos mit dem NVB-Wert 70 im Schritt S11 der Fig. 3 bereits eine Selektion durchgeführt wurde. Üblicherweise ist im Standard ISO 14443 der Cascade-Level 2 dafür vorgesehen, den zweiten Teil einer double oder triple Size Seriennummer zu ermitteln, und beginnt mit einem Neustart, d.h. der NVB-Wert wird auf 20 gesetzt.

Gemäß Fig. 5 wird nunmehr jedoch das zweite Durchlaufen der Antikollisions-Schleife dazu genutzt, eine Response des Authentisierungsverfahrens vom Transponder an das Lesegerät zu übertragen. Das Lesegerät sendet dabei in Schritt S5 als Antikollisions-Kommando ein Select-Kommando mit dem NVB-Wert 20 aus, was bedeutet, dass das entsprechende Datenfeld D1 die Länge von Null aufweist bzw. nicht vorhanden ist. Die Konsequenz ist somit, dass in der in Schritt S6 empfangenen Antwort R des Transponders ein Datenfeld D2 mit der Länge einer UID übertragen wird. Die Antwort R enthält nunmehr einen Teil der vom Transponder generierten Response RES des Authentisierungsprozesses. Die einzelnen Teile der Responses sind im rechten Teil der Fig. 5 wiederum in der Spalte C angedeutet. Bei der untersten Response in der Spalte wird dabei das Ende der Response durch eine simulierte Bitkollision X angedeutet, wobei die Bitpositionen nach der Bitkollision mit Füllzeichen in der Form von "0"-Bits aufgefüllt sind.

In Analogie zu dem Verfahren der Fig. 3 erfolgt in Schritt S7 der Fig. 5 die Überprüfung, ob eine unerwartete Bitkollision aufgetreten ist. Ist dies nicht der Fall, wird in einer nächsten Iteration der Antikollisions-Schleife der nächste Teil der Response übertragen, bis die gesamte Response im Lesegerät empfangen wurde (Schritte S8 und S9). Sollte eine unerwartete Kollision vorliegen, wird festgestellt, dass ein weiterer Transponder im Feld vorhanden ist, und es wird daraufhin gegebenenfalls das herkömmliche Antikollisionsverfahren durchgeführt, bei dem zunächst alle anwesenden Transponder identifiziert werden.

Wurden schließlich alle Teile der Response von einem erfindungsgemäßen Transponder an ein Lesegerät übertragen, kann der Transponder wiederum durch ein entsprechendes SEL-Kommando mit dem NVB-Wert 70 selektiert werden, wie im Schritt S11 der Fig. 5 angedeutet ist. Da in dem Challenge-Response-Authentisierungsprozess jedoch keine UID ermittelt wurde, wird anstelle der UID des Schritts S11 einer der Teile der Response als Seriennummer in dem SEL-Kommando verwendet. In Antwort auf das SEL-Kommando sendet dann der Transponder entsprechend dem Standard ISO 14443 ein Select-Acknowledgement SAK.

Für eine gegenseitige Authentisierung bzw. komplexere Authentisierungsprotokolle kann der Austausch der erforderlichen Daten vom Transponder zum Lesegerät und umgekehrt beliebig häufig wiederholt und beliebig oft abgewechselt werden. Erfindungsgemäß können dabei die gleichen, oben beschriebenen Mechanismen eingesetzt werden. Es kann somit in einem ISO 14443-System ein Authentisierungsprozess im Rahmen einer Antikollisions-Schleife oder mehrerer Antikollisions-Schleifen abgewechselt werden. Der Protokollablauf kann dabei vorgegeben sein oder durch den Cascade-Level und die ausgetauschten Daten gesteuert werden. Beispielsweise könnte bei Cascade-Level1 die Selektion des erfindungsgemäßen Datenträgers erfolgen und bei Cascade-Level 2 die Datenübertragung vom Lesegerät zum Transponder und bei Cascade-Level 3 die Datenübertragung vom Transponder zum Lesegerät.

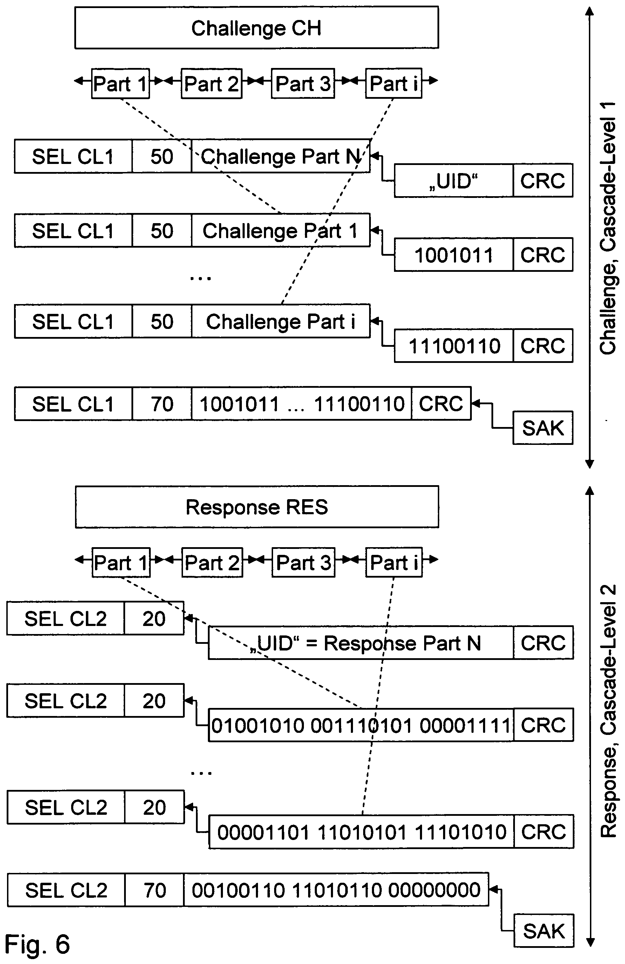

Fig. 6 zeigt in schematischer Darstellung eine beispielhafte Zusammenfassung von in der Challenge-Response-Authentisierung übertragenen Nachrichten. Im oberen Teil ist die Übertragung der Challenge-Daten CH in einer Antikollisions-Schleife des Cascade-Levels 1 in einzelnen Teilen Part 1, Part 2, ..., Part i wiedergegeben. Fig. 6 zeigt dabei die Übertragung der einzelnen Teile in Splitframes, was durch den NVB-Wert von 50 wiedergegeben wird. In Antwort auf jedes SEL-Kommando wird eine Zufallszahl von dem Transponder als UID empfangen. Nach Übertragung der Challenge-Daten erfolgt durch das SEL-Kommando mit dem NVB-Wert von 70 die Selektion des Transponders mit der oben beschriebenen PUPI, welche sich aus den vom Transponder an das Lesegerät übertragenen Zufallszahlen zusammensetzt. Die Selektion wird durch ein SAK-Acknowledgement bestätigt. Analog zur Übertragung der Challenge-Daten CH erfolgt die Übertragung der Response RES nunmehr in einer Antikollisions-Schleife des Cascade-Levels 2. Der NVB-Wert des SEL-Kommandos, welches vom Lesegerät ausgesendet wird, ist dabei auf den Wert 20 gesetzt, so dass die einzelnen Teile Part 1, Part 2, ..., Part i der Response in einem Splitframe mit maximaler Größe übertragen werden. Schließlich wird nach dem Abschluss der Übertragung der Response ein SEL-Kommando mit dem NVB-Wert von 70, enthaltend eine zuvor empfangene Response, ausgesendet. Der Transponder erkennt den Teil der Response im SEL-Kommando und schickt ein Select-Acknowledgement SAK an das Lesegerät zurück.

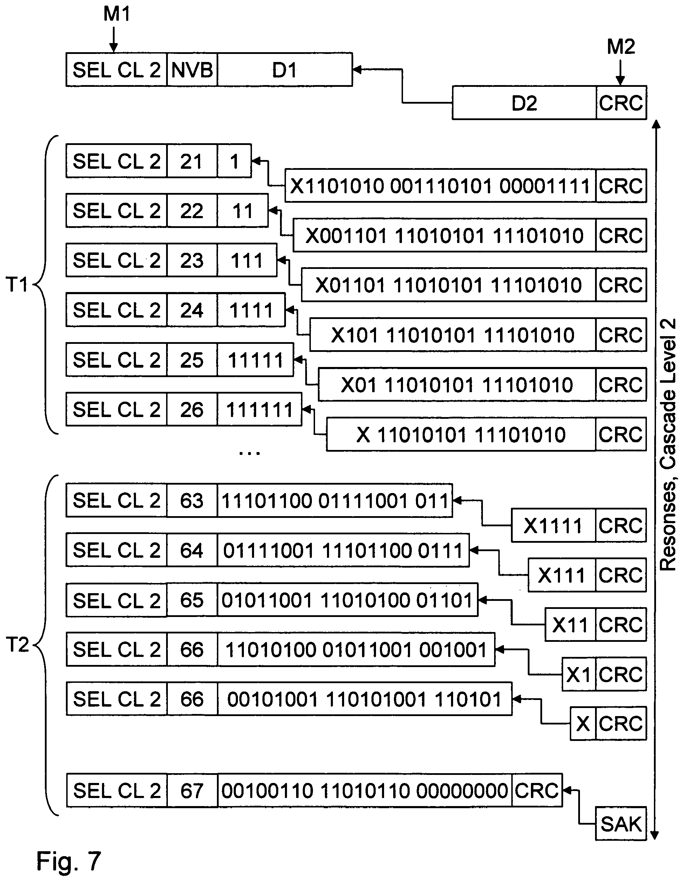

Fig. 7 zeigt eine mögliche Variante der Übertragung von Responses vom Transponder zum Lesegerät und anschließend vom Lesegerät zum Transponder im Rahmen einer gegenseitigen Authentisierung (englisch: mutual authentication). Die Übertragung der Responses läuft dabei im Cascade-Level 2 ab. In der ersten Zeile der Fig. 7 ist dabei allgemein der Aufbau der ausgetauschten Nachrichten mit entsprechendem NVB-Wert und Datenfeldern D1 bzw. D2 wiedergegeben. Die Nachricht M1 stellt dabei ein vom Lesegerät ausgesendetes Kommando und die Nachricht M2 eine vom Transponder ausgesendete Antwort dar. Im oberen Teil T1 der Fig. 7 ist dabei beispielhaft eine Übertragung einer Response von dem Transponder zum Lesegerät wiedergegeben. Man erkennt, dass die NVB-Werte der SEL-Kommandos schrittweise in jeder Iteration um ein Bit inkrementiert werden. An der ersten, vom Transponder gesendeten Bitstelle des Splitframes in Antwort auf das erste SEL-Kommando des Lesegeräts wird dabei eine Bitkollision simuliert, um dem Lesegerät zu signalisieren, dass es sich um einen erfindungsgemäßen Transponder handelt. Die von dem Lesegerät im Splitframe im entsprechenden Datenfeld D1 übertragenen Daten werden mit jeder Iteration um ein Bit länger und können z.B. mit einer Folge von "1"-Bits, "0"-Bits oder Zufallszahlen aufgefüllt werden.

Wurde die Response vom Datenträger zum Lesegerät innerhalb des Datenfelds D2 der Nachricht M2 vollständig übertragen, kann im nächsten Schritt die Response vom Lesegerät zum Datenträger übertragen werden. Dies ist im Teil T2 der Fig. 2 wiedergegeben. Es wird dabei der NVB-Wert auf einen möglichst hohen Wert gesetzt, um die Anzahl der Datenbits im Datenfeld D1 in dem vom Lesegerät gesendeten Teil des Splitframes möglichst groß zu machen. Der vom Transponder gesendete Rest des Splitframes kann im Datenfeld D2 z.B. mit einer Folge von "1"-Bits, "0"-Bits oder Zufallszahlen aufgefüllt werden.

Tritt während einer Antikollisions-Schleife in Fig. 7 eine bitweise Kollision in dem vom Transponder gesendeten Teil des Splitframes auf oder tritt bei Anwendung einer simulierten Kollision eine weitere unerwartete Kollision an einer anderen Bitposition auf, so kann das Lesegerät daraus schließen, dass sich mindestens ein weiterer Datenträger im Ansprechfeld des Lesegeräts befindet.

In dem erfindungsgemäßen Verfahren ist es insbesondere vorgesehen, dass die Transponder auch die Abarbeitung der Antikollisions-Schleife nach dem eigentlichen Bestimmungszweck unterstützen, d.h. dass die Selektion eines Transponders nach seiner Seriennummer UID durchgeführt werden kann. Diese Standardfunktion kann z.B. aktiviert werden, wenn eine Antikollisions-Schleife im Cascade-Level 1 mit dem üblicherweise verwendeten Startwert 20h im NVB-Parameter (Null Bit der UID sind bekannt) beginnt. In diesem Fall antworten die erfindungsgemäßen Transponder in einem Splitframe mit ihrer eigenen UID, so wie dies im Standard ISO 14443 beschrieben ist. Ist der Startwert hingegen größer 20h, so wird das erfindungsgemäße Verfahren zur Durchführung der Challenge-Response-Authentisierung durchgeführt. Dies ermöglicht es dem erfindungsgemäßen Lesegerät, nach dem Auftreten einer unerwarteten Kollision bei einer erfindungsgemäß durchgeführten Challenge-Response-Authentisierung die Antikollisions-Schleife abzubrechen, um diese dann mit dem Ziel der Selektion eines einzelnen Transponders neu zu starten.

Indem einzelne Transponder nach ihrer Selektion beim Abschluss einer Antikollisions-Schleife in den HALT-Mode gebracht und damit stumm geschaltet werden, können Kollisionen im erfindungsgemäßen Verfahren verhindert werden. Sollte das erfindungsgemäße Challenge-Response-Verfahren fehlschlagen, kann die Challenge-Response-Authentisierung basierend auf dem Stand der Technik für einen selektierten Transponder auch im Protokoll-Mode durchgeführt werden, sofern der Transponder ein entsprechendes Kommunikationsprotokoll unterstützt.

Der besondere Vorteil der im Vorangegangenen beschriebenen Varianten des erfindungsgemäßen Verfahrens besteht darin, dass ein Challenge-Response-Verfahren mit einem Transponder durchgeführt werden kann, ohne dass der Transponder ein entsprechendes Kommunikationsprotokoll unterstützen muss. Dies erleichtert die Implementation des Challenge-Response-Verfahrens z.B. in Software oder gegebenenfalls als Zustandsmaschine und erlaubt hierdurch die Herstellung billiger Transponder. Darüber hinaus wird wertvolle Zeit bei der Datenübertragung eingespart. Ebenso wird das Vorhandensein von mehr als einem Transponder zur selben Zeit im Ansprechfeld des Lesegeräts gemäß einer Ausführungsform des erfindungsgemäßen Verfahrens erkannt, so dass das Lesegerät mit geeigneten Maßnahmen darauf reagieren kann.

Falls der Transponder ein Übertragungsprotokoll für die Challenge-Response-Authentisierung unterstützt, wird ebenfalls Zeit bei der Durchführung der Authentisierung gespart. In diesem Fall kann die Datenübertragung im Protokoll sofort verschlüsselt gestartet werden, da eine gegenseitige Authentisierung bereits erfolgt ist und eventuell benötigte Schlüssel bereits zur Verfügung stehen.

## Patentansprüche

1. Verfahren zur Challenge-Response-Authentisierung zwischen einem Lesegerät und einem Transponder basierend auf einer kontaktlosen Datenübertragung, bei dem:
- Challenge-Daten (CH) von dem Lesegerät an den Transponder mittels eines oder mehrerer Kommandos (AC) eines Antikollisionsverfahrens zur Ermittlung von Transponder-Identifikationsdaten (UID) innerhalb einer Antikollisions-Schleife übermittelt werden, wobei in dem oder den Kommandos (AC) jeweils Challenge-Daten (CH) in einem Datenfeld (D1) enthalten sind, welches zur Spezifikation von Transponder-Identifikationsdaten (UID) verwendet wird, und durch einen Parameterwert (NVB) in dem oder zumindest einem der Kommandos (AC) dem Transponder angezeigt wird, dass das Datenfeld (D1) des oder der Kommandos (AC) anstatt von Transponder-Identifikationsdaten (UID) Challenge-Daten (CH) enthält;
- der Transponder anhand des Parameterwerts (NVB) erkennt, dass in dem oder den empfangenen Kommandos (AC) Challenge-Daten (CH) enthalten sind, woraufhin der Transponder die übermittelten Challenge-Daten basierend auf der Challenge-Response-Authentisierung verarbeitet, nach Übermittlung der Challenge-Daten eine weitere Antikollisions-Schleife durchlaufen wird, in der Response-Daten (RES) basierend auf der Challenge-Response-Authentisierung von dem Transponder an das Lesegerät mittels einer oder mehrerer Antworten des Antikollisionsverfahrens übertragen werden, wobei die Response-Daten (RES) in einem Datenfeld (D2) der Antwort enthalten sind, welches zur Übermittlung von Transponder-Identifikationsdaten dient.

2. Verfahren nach Anspruch 1, **dadurch gekennzeichnet, dass** das Antikollisionsverfahren ein Binary-Search-Verfahren, insbesondere das dynamische Binary-Search-Verfahren, ist und/ oder die kontaktlose Datenübertragung nach dem Standard ISO 14443 erfolgt.

3. Verfahren nach Anspruch 2, **dadurch gekennzeichnet, dass** die Kommandos (AC) des Antikollisionsverfahrens SEL-Kommandos sind und das Datenfeld (D1) zur Spezifikation der Transponder-Identifikationsdaten ein UID-Datenfeld zur Spezifikation der UID eines Transponders ist.

4. Verfahren nach Anspruch 3, **dadurch gekennzeichnet, dass** der Parameterwert (NVB) der NVB-Wert eines SEL-Kommandos ist, wobei der NVB-Wert die Anzahl der im Lesegerät bekannten Bits der UID des Transponders anzeigt und wobei durch einen NVB-Wert, gemäß dem zumindest ein Teil der Bits der UID des Transponders bekannt sind, dem Transponder angezeigt wird, dass in dem UID-Datenfeld des SEL-Kommandos Challenge-Daten (CH) anstatt der UID übertragen werden.

5. Verfahren nach einem der vorhergehenden Ansprüche, **dadurch gekennzeichnet, dass** der Transponder nach Empfang eines jeweiligen Kommandos (AC) eine jeweilige Antwort (R) an das Lesegerät übermittelt, woraufhin das Lesegerät nach Empfang der Antwort (R) ein neues Kommando (AC) mit einem noch nicht an den Transponder übermittelten Teil der Challenge-Daten (CH) an den Transponder übermittelt, sofern noch nicht alle Challenge-Daten (CH) an den Transponder übermittelt worden sind.

6. Verfahren nach Anspruch 5, **dadurch gekennzeichnet, dass** die jeweilige Antwort (R) des Transponders ein Datenfeld (D2) umfasst, welches zur Übermittlung von Transponder-Identifikationsdaten des Transponders verwendet wird, wobei das Datenfeld (D2) anstatt der Transponder-Identifikationsdaten eine Zufallszahl und/oder eine vorbestimmte Bitfolge enthält und wobei als Datenfeld insbesondere ein UID-Datenfeld zur Übermittlung der UID des Transponders an das Lesegerät verwendet wird.

7. Verfahren nach Anspruch 6, **dadurch gekennzeichnet, dass** die Anwesenheit von mehreren Transpondern im Feld des Lesegeräts festgestellt wird, wenn das Lesegerät eine jeweilige Antwort (R) des Transponders empfängt, welche nicht die Information umfasst, dass die Antwort eine Zufallszahl und/ oder eine vorbestimmte Bitfolge enthält.

8. Verfahren nach Anspruch 1 in Verbindung mit Anspruch 2, **dadurch gekennzeichnet, dass** innerhalb der weiteren Antikollisions-Schleife ein oder mehrere SEL-Kommandos von dem Lesegerät an den Transponder übertragen werden, wobei die SEL-Kommandos durch den Transponder mit Response-Daten enthaltende Antworten beantwortet werden und wobei in einem jeweiligen SEL-Kommando durch den NVB-Wert angezeigt wird, dass dem Lesegerät kein Bit der UID des Transponders bekannt ist.

9. Verfahren nach einem der Anspruch 8, **dadurch gekennzeichnet, dass** innerhalb der weiteren Antikollisions-Schleife ferner nach Übertragung der Response-Daten von dem Transponder zu dem Lesegerät wiederum Response-Daten von dem Lesegerät an den Transponder übertragen werden.

10. Verfahren nach Anspruch 9, wenn abhängig von Anspruch 2, **dadurch gekennzeichnet, dass** die Response-Daten von dem Transponder an das Lesegerät derart übertragen werden, dass von dem Lesegerät an den Transponder aufeinander folgend SEL-Kommandos übermittelt werden, welche durch den Transponder mit Response-Daten enthaltenden Antworten beantwortet werden, wobei die NVB-Werte der SEL-Kommandos vorzugsweise anzeigen, dass lediglich ein Teil der Bits der UID des Transponders bekannt ist, und wobei in den jeweiligen Antworten vorzugsweise eine Bitkollision simuliert ist.

11. System zur Challenge-Response-Authentisierung basierend auf einer kontaktlosen Datenübertragung, umfassend ein Lesegerät und einen Transponder, welche im Betrieb derart zusammenwirken, dass:
- Challenge-Daten (CH) von dem Lesegerät an den Transponder mittels eines oder mehrerer Kommandos (AC) eines Antikollisionsverfahrens zur Ermittlung von Transponder-Identifikationsdaten (UID) innerhalb einer Antikollisions-Schleife übermittelt werden, wobei in dem oder den Kommandos (AC) jeweils Challenge-Daten (CH) in einem Datenfeld (D1) enthalten sind, welches zur Spezifikation von Transponder-Identifikationsdaten (UID) verwendet wird, und durch einen Parameterwert (NVB) in dem oder zumindest einem der Kommandos (AC) dem Transponder angezeigt wird, dass das Datenfeld (D1) des oder der Kommandos (AC) anstatt von Transponder-Identifikationsdaten (UID) Challenge-Daten (CH) enthält;
- der Transponder anhand des Parameterwerts (NVB) erkennt, dass in dem oder den empfangenden Kommandos (AC) Challenge-Daten (CH) enthalten sind, woraufhin der Transponder die übermittelten Challenge-Daten basierend auf der Challenge-Response-Authentisierung verarbeitet; und
- der Transponder nach Übermittlung der Challenge-Daten eine weitere Antikollisions-Schleife durchläuft, in der Response-Daten (RES) basierend auf der Challenge-Response-Authentisierung an das Lesegerät mittels einer oder mehrerer Antworten des Antikollisionsverfahrens übertragen werden, wobei die Response-Daten (RES) in einem Datenfeld (D2) der Antwort enthalten sind, welches zur Übermittlung von Transponder-Identifikationsdaten dient.

12. System nach Anspruch 11, welches derart ausgestaltet ist, dass ein Verfahren nach einem der Ansprüche 2 bis 10 mit dem System durchführbar ist.

13. Lesegerät zur Verwendung in einem System nach Anspruch 11 oder 13.

14. Transponder zur Verwendung in einem System nach Anspruch 11 oder 12.

## Claims

1. A method for challenge-response authentication between a reading device and a transponder based on a contactless data transmission, in which:
- challenge data (CH) are transferred within an anti-collision loop from the reading device to the transponder by means of one or several commands (AC) of an anti-collision method for determining transponder identification data (UID), wherein the command or commands (AC) respectively contain challenge data (CH) in a data field (D1) which is used to specify transponder identification data (UID), and it is indicated to the transponder by a parameter value (NVB) in the command or in at least one of the commands (AC) that the data field (D1) of the command or the commands (AC) contains challenge data (CH) instead of transponder identification data (UID);
- the transponder recognizes with the help of the parameter value (NVB) that challenge data (CH) are contained in the received command or commands (AC), whereupon the transponder processes the transferred challenge data on the basis of the challenge-response authentication, after the transfer of the challenge data a further anti-collision loop is run through, in which response data (RES) based on the challenge-response authentication are transmitted from the transponder to the reading device by means of one or several responses of the anti-collision method, wherein the response data (RES) are contained in a data field (D2) of the response, the data field serving to transfer transponder identification data.

2. The method according to claim 1, **characterized in that** the anti-collision method is a binary search method, in particular the dynamic binary-search method, and/ or the contactless data transmission takes place according to the standard ISO 14443.

3. The method according to claim 2, **characterized in that** the commands (AC) of the anti-collision method are SEL commands and the data field (D1) for specifying the transponder identification data is a UID data field for specifying the UID of a transponder.

4. The method according to claim 3, **characterized in that** the parameter value (NVB) is the NVB value of a SEL command, wherein the NVB value indicates the number of the bits of the transponder's UID known in the reading device, and wherein it is indicated to the transponder by an NVB value, according to which at least a part of the bits of the UID of the transponder are known, that in the UID data field of the SEL command there are transmitted challenge data (CH) instead of the UID.

5. The method according to any of the preceding claims, **characterized in that**, after receipt of a respective command (AC), the transponder transfers a respective response (R) to the reading device, whereupon, after receipt of the response (R), the reading device transfers to the transponder a new command (AC) with a part of the challenge data (CH) not yet transferred to the transponder, provided that not all challenge data (CH) have been transferred to the transponder yet.

6. The method according to claim 5, **characterized in that** the respective response (R) of the transponder comprises a data field (D2) that is used for transferring transponder identification data of the transponder, wherein the data field (D2) contains a random number and/ or a predetermined bit sequence instead of the transponder identification data, and wherein as data field in particular a UID data field is used for transferring the UID of the transponder to the reading device.

7. The method according to claim 6, **characterized in that** the presence of several transponders in the field of the reading device is established when the reading device receives a respective response (R) of the transponder which does not comprise the information that the response contains a random number and/ or a predetermined bit sequence.

8. The method according to claim 1 in connection with claim 2, **characterized in that** within the further anti-collision loop one or several SEL commands are transmitted from the reading device to the transponder, wherein the SEL commands are responded to by the transponder with responses containing response data and wherein it is indicated by the NVB value in a respective SEL command that no bit of the transponder's UID is known to the reading device.

9. The method according to claim 8, **characterized in that** within the further anti-collision loop, further, after transmission of the response data from the transponder to the reading device, response data are again transmitted from the reading device to the transponder.

10. The method according to claim 9, when dependent on claim 2, **characterized in that** the response data are transmitted from the transponder to the reading device in such a fashion that from the reading device to the transponder there are transferred successive SEL commands which are responded to by the transponder with responses containing response data, wherein the NVB values of the SEL commands preferably indicate that merely a part of the bits of the transponder's UID is known, and wherein in the respective responses preferably a bit collision is simulated.

11. A system for challenge-response authentication based on a contactless data transmission, comprising a reading device and a transponder, which in operation interact in such a fashion that:
- challenge data (CH) are transferred within an anti-collision loop from the reading device to the transponder by means of one or several commands (AC) of an anti-collision method for determining transponder identification data (UID), wherein the command or commands (AC) respectively contain challenge data (CH) in a data field (D1) which is used to specify transponder identification data (UID), and it is indicated to the transponder by a parameter value (NVB) in the command or in at least one of the commands (AC) that the data field (D1) of the command or the commands (AC) contains challenge data (CH) instead of transponder identification data (UID);
- the transponder recognizes with the help of the parameter value (NVB) that challenge data (CH) are contained in the received command or commands (AC), whereupon the transponder processes the transferred challenge data on the basis of the challenge-response authentication, and
- after the transfer of the challenge data a further anti-collision loop is run through by the transponder, in which response data (RES) based on the challenge-response authentication are transmitted to the reading device by means of one or several responses of the anti-collision method, wherein the response data (RES) are contained in a data field (D2) of the response, the data field serving to transfer transponder identification data.

12. The system according to claim 11, configured in such a fashion that a method according to any of claims 2 to 10 can be carried out with the system.

13. A reading device for use in a system according to claim 11 or 13.

14. A transponder for use in a system according to claim 11 or 12.

## Revendications

1. Procédé d'authentification challenge/response entre un appareil de lecture et un transpondeur, basé sur un transfert de données sans contact, dans lequel :
- des données de challenge (CH) sont transmises, à l'intérieur d'une boucle d'anticollision, de l'appareil de lecture au transpondeur au moyen d'une ou de plusieurs commandes (AC) d'un procédé d'anticollision destinées à la détermination de données d'identification de transpondeurs (UID), cependant que, dans la ou les commandes (AC), respectivement des données de challenge (CH) sont contenues dans un champ de données (D1) utilisé pour la spécification de données d'identification de transpondeurs (UID), et que, par une valeur paramétrique (NVB) incluse dans la ou au moins une des commandes (AC), il est indiqué au transpondeur que le champ de données (D1) de la ou des commandes (AC) contient, au lieu de données d'identification de transpondeurs (UID), des données de challenge (CH) ;
- le transpondeur reconnaît à l'aide de la valeur paramétrique (NVB) que, dans la ou les commandes (AC) reçues, des données de challenge (CH) sont contenues, à la suite de quoi le transpondeur traite, sur la base de l'authentification challenge/response, les données de challenge transmises, une autre boucle d'anticollision est, après transmission des données de challenge, parcourue, dans laquelle des données de response (RES) sont, sur la base de l'authentification challenge/response, transférées du transpondeur à l'appareil de lecture au moyen d'une ou de plusieurs réponses du procédé d'anticollision, cependant que les données de response (RES) sont contenues dans un champ de données (D2) de la réponse, lequel sert à la transmission de données d'identification de transpondeur.

2. Procédé selon la revendication 1, **caractérisé en ce que** le procédé d'anticollision est un procédé de recherche binaire, en particulier le procédé dynamique de recherche binaire, et/ou que le transfert de données sans contact a lieu conformément au standard ISO 14443.

3. Procédé selon la revendication 2, **caractérisé en ce que** les commandes (AC) du procédé d'anticollision sont des commandes SEL et que le champ de données (D1) pour la spécification des données d'identification de transpondeur est un champ de données UID pour la spécification des UID d'un transpondeur.

4. Procédé selon la revendication 3, **caractérisé en ce que** la valeur paramétrique (NVB) est la valeur NVB d'une commande SEL, cependant que la valeur NVB indique le nombre de bits des UID du transpondeur connus dans l'appareil de lecture, et cependant que, par une valeur NVB suivant laquelle au moins une partie des bits des UID du transpondeur sont connus, il est indiqué au transpondeur que, dans le champ de données UID de la commande SEL, des données de challenge (CH) sont transférées au lieu des données UID.

5. Procédé selon une des revendications précédentes, **caractérisé en ce que** le transpondeur, après réception d'une commande respective (AC), transmet une réponse (R) respective à l'appareil de lecture, à la suite de quoi l'appareil de lecture , après réception de la réponse (R), transmet au transpondeur une nouvelle commande (AC) avec une partie des données de challenge (CH) non, encore transmises au transpondeur, dans la mesure où toutes les données de challenge (CH) n'ont pas encore été transmises au transpondeur.

6. Procédé selon la revendication 5, **caractérisé en ce que** la réponse (R) respective du transpondeur comprend un champ de données (D2) qui est utilisé pour la transmission de données d'identification de transpondeur du transpondeur, cependant que le champ de données (D2) contient, au lieu des données d'identification de transpondeur, un nombre aléatoire et/ou une chaîne de bits prédéterminée, et cependant qu'en tant que champ de données, c'est en particulier un champ de données UID qui est utilisé pour la transmission des UID du transpondeur à l'appareil de lecture.

7. Procédé selon la revendication 6, **caractérisé en ce que** la présence de plusieurs transpondeurs dans le champ de l'appareil de lecture est constatée quand l'appareil de lecture reçoit une réponse (R) respective du transpondeur ne comprenant pas l'information selon laquelle la réponse contient un nombre aléatoire et/ou une chaîne de bits prédéterminée.

8. Procédé selon la revendication 1 en corrélation avec la revendication 2, **caractérisé en ce que**, à l'intérieur de l'autre boucle d'anticollision, une ou plusieurs commandes SEL sont transférées de l'appareil de lecture au transpondeur, cependant que, aux commandes SEL, le transpondeur répond par des réponses contenant des données de response, et cependant que, dans une commande SEL respective, il est indiqué par la valeur NVB que l'appareil de lecture ne connaît pas de bit des UID du transpondeur.

9. Procédé selon la revendication 8, **caractérisé en ce que**, à l'intérieur de l'autre boucle d'anticollision, ce sont en outre des données response qui, après transfert des données response du transpondeur à l'appareil de lecture, sont en revanche transférées de l'appareil de lecture au transpondeur.

10. Procédé selon la revendication 9, quand dépendant de la revendication 2, **caractérisé en ce que** les données de response sont transférées de telle façon du transpondeur à l'appareil de lecture que, de l'appareil de lecture au transpondeur, des commandes SEL sont successivement transmises, auxquelles le transpondeur répond par des réponses contenant des données de response, cependant que les valeurs NVB des commandes SEL indiquent de préférence que seule une partie des bits des UID du transpondeur est connue, et cependant que, dans les réponses respectives, il est de préférence simulé une collision de bits.

11. Système d'authentification challenge/response basé sur un transfert de données sans contact, comprenant un appareil de lecture et un transpondeur qui, lors du fonctionnement, co-agissent de telle façon que :
- des données de challenge (CH) sont transmises de l'appareil de lecture au transpondeur au moyen d'une ou de plusieurs commandes (AC) d'un procédé d'anticollision destinées à la détermination de données d'identification de transpondeurs (UID) à l'intérieur d'une boucle d'anticollision, cependant que, dans la ou les commandes (AC), respectivement des données de challenge (CH) sont contenues dans un champ de données (D1) utilisé pour la spécification de données d'identification de transpondeur (UID), et que, par une valeur paramétrique (NVB) incluse dans la ou au moins une des commandes (AC), il est indiqué au transpondeur que le champ de données (D1) de la ou des commandes (AC) contient, au lieu de données d'identification de transpondeurs (UID), des données de challenge (CH) ;
- le transpondeur reconnaît à l'aide de la valeur paramétrique (NVB) que, dans la ou les commandes (AC) reçues, des données de challenge (CH) sont contenues, à la suite de quoi le transpondeur traite, sur la base de l'authentification challenge/response, les données de challenge transmises ; et
- le transpondeur, après transmission des données de challenge, parcourt une autre boucle d'anticollision dans laquelle des données de response (RES) sont, sur la base de l'authentification challenge/response, transférées à l'appareil de lecture au moyen d'une ou de plusieurs réponses du procédé d'anticollision, cependant que les données de response (RES) sont contenues dans un champ de données (D2) de la réponse, lequel sert à la transmission de données d'identification de transpondeur.

12. Système selon la revendication 11, lequel est conçu de telle façon qu'un procédé selon une des revendications de 2 à 10 est exécutable avec le système.

13. Appareil de lecture destiné à être utilisé dans un système selon la revendication 11 ou 13.

14. Transpondeur destiné à être utilisé dans un système selon la revendication 11 ou 12.
